# EUROPÄISCHE PATENTSCHRIFT

(11) **EP 3 774 172 B1**
(45) Veröffentlichungstag und Bekanntmachung des Hinweises auf die Patenterteilung: **24.11.2021**
(21) Anmeldenummer: 19714641.8
(22) Anmeldetag: 29.03.2019
(51) Int. Cl.: B23P 19/08

(54) **VERFAHREN ZUR MONTAGE EINES RINGFÖRMIGEN DICHTUNGSELEMENTS**
METHOD FOR MOUNTING AN ANNULAR SEALING ELEMENT
PROCÉDÉ DE MONTAGE D'UN ÉLÉMENT D'ÉTANCHÉITÉ ANNULAIRE

(30) Priorität: 04.04.2018 DE 102018205081
(43) Veröffentlichungstag der Anmeldung: 17.02.2021
(73) Patentinhaber: thyssenkrupp Presta AG, 9492 Eschen (LI); thyssenkrupp AG, 45143 Essen (DE)
(72) Erfinder: SCHÄDLER, Sebastian, 9497 Triesenberg (LI); MÜNSTER, Andreas, 88138 Weissensberg (DE); STADELMANN, Manuel, 6832 Sulz (AT)
(74) Vertreter: thyssenkrupp Intellectual Property GmbH
(86) Internationale Anmeldenummer: PCT/EP2019/057970
(87) Internationale Veröffentlichungsnummer: WO 2019/192927

(56) Entgegenhaltungen:
- DE-A1-102006 044 748
- DE-U1-202014 106 214
- WOSSNER J F: "FLEXIBLE O-RING-MONTAGE IN STIRNFLACHENNUTEN", TECHNISCHE RUNDSCHAU,, Bd. 85, Nr. 42, 22. Oktober 1993 (1993-10-22), Seiten 36-41, XP000398137, ISSN: 1023-0823

## Beschreibung

### Stand der Technik

Die Erfindung betrifft ein Verfahren zur Montage eines ringförmigen Dichtungselements , der durch eine um eine Öffnung umlaufende Dichtschnur gebildet wird, an einer außen an einem Bauteil umlaufenden Dichtungsaufnahme, umfassend die Schritte:
- Einführen von zwei Montagefingern in die Öffnung des ringförmigen Dichtungselements ,
- Aufspannen des ringförmigen Dichtungselements durch Auseinanderbewegen der Montagefinger unter Bildung eines zwischen den Montagefingern frei gespannten Schnurabschnitts der Dichtschnur,
- Anlegen des frei gespannten Schnurabschnitts in einem Kontaktbereich an die Dichtungsaufnahme,
- Aufbringen des ringförmigen Dichtungselements mit seiner Öffnung auf die Dichtungsaufnahme,
- Entfernen der Montagefinger aus dem ringförmigen Dichtungselement.

Zur Abdichtung eines Bauteils innerhalb eines dieses von außen umgebenden Gegenbauteils ist es bekannt, ein ringförmiges Dichtungselements, wie beispielsweise einen O-Ring, der durch eine endlose, eine Öffnung ringförmig umschließende Ring- oder Dichtschnur aus einem elastischen Dichtmaterial gebildet wird und daher auch Ringschnurdichtung genannt wird, zwischen dem Außenumfang des Bauteils und dem Innenumfang des besagten Gegenbauteils einzufügen. Das Bauteil weist eine auf einer äußeren Mantelfläche umlaufende Dichtungsaufnahme auf, beispielsweise eine umlaufende, nach außen offene Nut, deren Verlauf mit dem Öffnungsquerschnitt des O-Rings korrespondiert. Zur Montage kann das Bauteil durch die Öffnung des O-Rings hindurch gesteckt werden kann, bis der O-Ring das Bauteil im Bereich der Dichtungsaufnahme umschließt. Mit der derart montierten Dichtung wird das Bauteil anschließend mit seiner Dichtungsaufnahme in das Gegenbauteil eingefügt, wobei die Dichtschnur den umlaufenden Ringspalt zwischen Bauteil und Gegenbauteil elastisch dichtend ausfüllt.

Ein Verfahren zur automatisierten Montage eines O-Rings auf einem zylindrischen Bauteil ist in der DE 10 2006 044 748 A1 beschrieben. Dieses sieht vor, dass zwei langgestreckte, darin als Fügenadeln bezeichnete, stiftförmige Montagefinger mit ihren freien Enden gemeinsam in die Offnung eines O-Rings eingeführt werden, und dann quer zur Einführungsrichtung auseinander bewegt werden, wodurch der O-Ring zu einer ovalen Form aufgespreizt oder aufgespannt wird. Dadurch wird zwischen den Montagefingern ein frei gespannter Schnurabschnitt gebildet, der in einem Kontaktbereich von außen an die Dichtungsaufnahme angelegt wird. Dies wird dadurch bewirkt, dass das Bauteil in einer relativen Bewegung in den offenen Querschnitt des zwischen den Montagefingern aufgespannten O-Rings eingeschwenkt wird. Auf diese Weise wird der O-Ring über das Bauteil gezogen, bis die gesamte Dichtungsaufnahme vollständig in den O-Ring eintaucht. Abschließend werden die Montagefinger entgegen der Einsetzrichtung zwischen O-Ring und Bauteil herausgezogen. Die DE 10 2006 044 748 A1 offenbart die Merkmale des Oberbegriffes des Anspruchs 1.

Die bekannte automatisierte Montage des ringförmigen Dichtungselements beziehungsweise des O-Rings auf einem Bauteil ist gegenüber einer manuellen Montage vorteilhaft für eine rationelle Fertigung. Nachteilig ist jedoch, dass der O-Ring beim Aufspannen und Aufbringen durch die Montagefinger relativ weit aufgespannt werden muss und durch den vorgegebenen Bewegungsablauf eine unerwünschte mechanische Beanspruchung, Verdrillung oder Tordierung des O-Rings beim Montieren auf der Dichtungsaufnahme auftreten kann.

Angesichts der vorangehend erläuterten Problematik ist es eine Aufgabe der vorliegenden Erfindung, ein verbessertes automatisiertes Verfahren zur Montage eines ringförmigen Dichtungselements an einer außen an einem Bauteil umlaufenden Dichtungsaufnahme anzugeben, welches eine reduzierte mechanische Beanspruchung und Verformung bei der Montage ermöglicht.

### Darstellung der Erfindung

Diese Aufgabe wird erfindungsgemäß gelöst durch ein Verfahren mit den Merkmalen des Anspruchs 1. Vorteilhafte Weiterbildungen ergeben sich aus den Unteransprüchen. Erfindungsgemäß wird für eine Verfahren zur Montage eines ringförmigen Dichtungselements, der durch eine um eine Öffnung umlaufende Dichtschnur gebildet wird, an einer außen an einem Bauteil umlaufenden Dichtungsaufnahme, umfassend die Schritte:
- Einführen von zwei Montagefingern in die Öffnung des ringförmigen Dichtungselements ,
- Aufspannen des ringförmigen Dichtungselements durch Auseinanderbewegen der Montagefinger unter Bildung eines zwischen den Fingern frei gespannten Schnurabschnitts der Dichtschnur,
- Anlegen des frei gespannten Schnurabschnitts in einem Kontaktbereich an die Dichtungsaufnahme,
- Aufbringen des ringförmigen Dichtungselements mit seiner Öffnung auf die Dichtungsaufnahme,
- Entfernen der Montagefinger aus dem ringförmigen Dichtungselements, vorgeschlagen, dass zum Aufbringen des ringförmigen Dichtungselements die Montagefinger dem Verlauf der Dichtungsaufnahme folgend bewegt werden, zum gegenläufigen Umfahren der Dichtungsaufnahme.

Das ringförmige Dichtungselement ist bevorzugt ein Runddichtring und kann als Wellendichtring und besonders bevorzugt als O-Ring ausgebildet sein, welcher ein geschlossener Ring mit rundem Querschnitt ist. Weiterhin ist es denkbar und möglich, dass das ringförmige Dichtungselement im Querschnitt als regelmässiges oder unregelmässiges Vieleck ausgebildet sein kann. Zur Vereinfachung werden die Ausführungsformen des ringförmigen Dichtelements im weiteren einfach unter dem Begriff O-Ring subsumiert.

Beim erfindungsgemäßen Verfahren werden die Montagefinger an der Dichtungsaufnahme entlang bewegt, wobei die Dichtschnur jeweils hinter dem Montagefinger von außen auf der Dichtungsaufnahme positioniert wird. Beim Anlegen befindet sich der Kontaktbereich zwischen den Montagefingern. Zum gegenläufigen Umfahren wird, vom Kontaktbereich aus gesehen der eine Finger in eine Richtung kontinuierlich entlang der Dichtungsaufnahme bewegt, und der andere Finger in der entgegengesetzten Richtung, so dass der Umfang des Bauteils im Bereich der Dichtungsaufnahme zumindest abschnittweise von den Montagefingern umfahren wird. Dabei ist das ringförmige Dichtungselementwährend des Aufbringens bevorzugt immer zwischen dem Kontaktbereich, in dem das ringförmige Dichtungselement bereits an der Dichtungsaufnahme anliegt und der beim Umfahren kontinuierlich vergrößert wird, und den beiden Montagefingern aufgespannt.

Gemäß der Erfindung wird die Dichtschnur durch die Montagefinger fortlaufend kontrolliert und lagerichtig relativ zum Bauteil auf der Dichtungsaufnahme positioniert. Dies wird dadurch erreicht, dass während des Aufbringens nicht nur wie im Stand der Technik eine relative Bewegung des als Ganzes aufgespannten O-Rings zum Bauteil erfolgt, während die Montagefinger in der aufgespannten Position verharren, sondern zusätzlich die Montagefinger bevorzugt kontinuierlich relativ zueinander bewegt werden, abhängig von der relativen Position des O-Rings zur Dichtungsaufnahme. Die relative Bewegung der Montagefinger kann dem Verlauf der Dichtungsaufnahme im Raum folgen. Dadurch kann ein übermäßig weites anfängliches Aufspannen zur Anpassung an den Bauteilquerschnitt vermieden werden. Außerdem können unerwünschte und potentiell funktionsbeeinträchtigende Verformungen des O-Rings weitgehend verhindert werden. Dadurch kann die mechanische Beanspruchung der Dichtschnur bei der Montage reduziert werden, und die Dichtfunktion kann besser gewährleistet werden.

Darüber hinaus ist ein weiterer Vorteil, dass ein O-Ring nicht nur auf einem zylindrischen Bauteil, sondern auch auf einem Bauteil mit asymmetrischem oder unregelmäßigem Querschnitt im Bereich der Dichtungsaufnahme montiert werden kann. Die Anpassung der aus dem Stand der Technik bekannten Verfahren an derartige Anwendungen ist nicht oder nur mit großem Aufwand möglich.

Eine vorteilhafte Ausgestaltung ist, dass die Montagefinger beim Umfahren mit im Wesentlichen gleichbleibendem Abstand zur Dichtungsaufnahme bewegt werden. Dadurch wird die Dichtschnur unter gleichmäßigem Winkel an die Dichtungsaufnahme herangeführt und angelegt. Die mechanische Spannung der Dichtschnur während der Montage kann vergleichmäßigt werden, selbst bei unregelmäßigen oder asymmetrischen Bauteilquerschnitten. Verformungen können ebenfalls verringert werden.

Es kann vorgesehen sein, dass die Montagefinger an unabhängig voneinander mehrachsig bewegbaren Robotermanipulatoren angebracht sind. Mehrachsige Robotermanipulatoren sind beispielsweise in Form von Roboterarmen bekannt, und ermöglichen eine freie mehrachsige, gegebenenfalls getrennte oder gleichzeitige translatorische und/oder rotatorische Bewegung eines daran angebrachten Montagefingers im Raum. Durch die unabhängige Bewegbarkeit können die Montagefinger zum Aufspannen des O-Rings, und insbesondere auch beim Umfahren der Dichtungsaufnahme relativ zueinander bewegt werden. Durch synchrone Bewegung kann beispielsweise die Annäherung eines aufgespannten O-Rings zum Anlegen an die Dichtungsaufnahme erfolgen.

Ein besonderer Vorteil ist, dass durch entsprechende Programmierung der Robotermanipulatoren eine Anpassung an unterschiedlichste O-Ringe und Bauteilegeometrien mit geringem Aufwand möglich ist. Dadurch ist auch ein universeller Einsatz einer Montageanlage für unterschiedliche Bauformen und Ausführungen von Bauteilen und O-Ringen möglich, so dass eine vorteilhafte, rationelle Fertigung realisiert werden kann.

Die Montagefinger sind bevorzugt langgestreckt, stiftförmig ausgebildet, und können zylindrisch mit kreisrundem Querschnitt sein.

Es kann vorgesehen sein, dass zumindest ein Montagefinger eine Haltevorrichtung aufweist, in der die Dichtschnur beim Aufspannen und Umfahren positioniert ist. Die Haltevorrichtung kann beispielsweise eine bevorzugt um den Montagefinger umlaufende Haltenut umfassen, in welcher der O-Ring bevorzugt formschlüssig positioniert und gehalten werden kann. Durch die Haltevorrichtung kann der O-Ring in eindeutig definierter Position längs des Montagefingers gehalten werden, so dass im aufgespannten Zustand der O-Ring eindeutig auf den Montagefingern positioniert ist und demzufolge das Anlegen unter Zugrundelegung der Positionierung der Montagefinger vereinfacht werden kann. Ein weiterer Vorteil ist, dass die Montagefinger beim Umfahren derartig bewegt werden können, dass die Position der Haltevorrichtung, beispielsweise einer Haltenut, dem Verlauf der Dichtungsaufnahme folgt, bevorzugt mit im Wesentlichen gleichbleibendem Abstand und Winkel zwischen der Haltevorrichtung und dem Kontaktpunkt, in dem die Dichtschnur beim Umfahren fortlaufend mit der Dichtungsaufnahme in Kontakt kommt. Eine umlaufende Haltenut kann einfach ausgebildet und zur formschlüssigen Aufnahme der Dichtschnur ausgebildet sein. Dadurch, dass die Haltenut um den Montagefinger umlaufend ausgebildet sein kann, wird die Dichtschnur während des Umfahrens in jeder dabei durchlaufenden Orientierung zwischen Montagefinger und O-Ring sicher und genau positioniert und geführt. Sind die Montagefinger zylindrisch ausgebildet, kann die Haltevorrichtung als Haltenut eine umlaufende, nach außen offene Radialnut umfassen. Gegenüber dem oben genannten Stand der Technik, der lediglich glatte Montagefinger offenbart, wird durch die Haltevorrichtung eine besser definierte Positionierung des O-Rings ermöglicht. Weiterhin kann die Dichtschnur auch an einer nicht parallel zu einer Aufnahmeebene, sondern dreidimensional im Raum verlaufenden Dichtungsaufnahme positioniert werden.

Eine Weiterbildung des Verfahrens sieht vor, dass zum Entfernen die Montagefinger relativ zur Dichtungsaufnahme und dem ringförmigen Dichtungselement verkippt werden. Das Entfernen erfolgt, sobald der Umfang der Dichtungsaufnahme zum größten Teil umfahren ist, so dass der O-Ring die Dichtungsaufnahme bereits vollständig umgibt, oder anders ausgedrückt sich das Bauteil vollständig innerhalb der Öffnung des O-Rings befindet. Der Kontaktbereich erstreckt sich dann über den bereits umfahrenen Umfangsbereich, in dem die Dichtschnur auf der Dichtungsaufnahme anliegend positioniert ist, und lediglich in einem relativ dazu kleineren Restabschnitt frei zwischen den Montagefingern elastisch gespannt ist. Der besagte Restabschnitt kann durch die Montagefinger relativ zu dem noch freien Restumfang der Dichtungsaufnahme folgend positioniert werden, so dass zum Abschluss der Montage lediglich die Montagefinger zwischen Dichtring und Bauteil heraus bewegt werden müssen. Erfindungsgemäß wird vorgeschlagen, dass die Montagefinger quasi herausgeschwenkt oder -gekippt werden, durch eine Drehbewegung um eine Kippachse, die sich parallel zu einem Abschnitt im Verlauf des O-Rings erstreckt, oder in einer Montageebene liegt, welche durch den Verlauf der Dichtschnur zwischen den Montagefingern und dem Kontaktbereich aufgespannt wird. Anders ausgedrückt werden die Montagefinger werden aus dem Zwischenraum zwischen Dichtungsaufnahme und O-Ring herausgehebelt. Ein Vorteil gegenüber dem Stand der Technik, bei dem die Montagefinger senkrecht zur besagten Montageebene translatorisch herausgezogen werden, ist, dass sowohl Fehlpositionierungen des O-Rings relativ zur Dichtungsaufnahme, als auch unerwünschte Beanspruchungen und Verformungen der Dichtschnur weitgehend vermieden werden können.

Das Verkippen zum Entfernen der Montagefinger kann vorteilhaft bei der oben genannten Ausführung realisiert werden, bei welcher die Montagefinger an unabhängig voneinander mehrachsig bewegbaren Robotermanipulatoren angebracht sind. Die Kippbewegung kann mit geringem Aufwand durch Programmierung der Bewegungsbahn der Robotermanipulatoren realisiert werden.

Die Dichtungsaufnahme durch eine außen umlaufende Nut an dem Bauteil gebildet werden. Die nach außen offene Nut verläuft um das Bauteil herum und umschließt dieses mit ihrem Verlauf, und ist beispielsweise bei einem zylindrischen Bauteil als außen auf dem Mantel umlaufende Radialnut ausgebildet. Der offene Nutquerschnitt kann bevorzugt an Form und Abmessung des Dichtungsquerschnitts der Dichtschnur abgepasst sein.

Das ringförmige Dichtungselement kann sich beim Aufspannen im Wesentlichen parallel zu einer Aufspannebene erstrecken, die eine Aufspannnormalenrichtung hat. Vor dem Anlegen, wenn der O-Ring zwischen den Montagefingern aufgespannt ist, hat dieser, wenn die Montagefinger einen kreisrunden Querschnitt haben, bildet der O-Ring ein in der Aufspannebene liegendes Oval.

Die Dichtungsaufnahme kann sich im Wesentlichen parallel zu einer Aufnahmeebene erstrecken, die eine Aufnahmenormalenrichtung hat. Eine um das Bauteil umlaufende Aufnahmenut der Dichtungsaufnahme kann beispielsweise als Radialnut ausgebildet sein, die parallel zu einer Radialebene verläuft.

Vor dem Anlegen des frei gespannten Schnurabschnitts kann die Aufspannebene relativ zur Aufnahmeebene geneigt werden, zum Kontaktieren der Innenseite der Schnur mit der Dichtungsaufnahme in dem Kontaktbereich. Beim Anlegen ist der O-Ring relativ zum Verlauf der Dichtungsaufnahme schräg verkippt. Die Drehbewegung zum Kippen und die Translationsbewegung zum Anlegen kann günstig mit einem vorangehend bereits erwähnten Robotermanipulator bewerkstelligt werden.

Es ist möglich, dass beim Umfahren die Aufspannebene auf die Aufnahmeebene zu verkippt wird. Der O-Ring ist beim Anlegen parallel zur Aufspannebene ausgerichtet, die relativ zur Aufnahmeebene geneigt ist. Beim Umfahren kann die Aufspannebene - bevorzugt kontinuierlich in einer zum Umfahren synchronen Dreh- oder Kippbewegung - parallel zur Aufspannebene ausgerichtet werden, so dass beim Abschluss des Umfahrens die Aufspannebene in der Aufnahmeebene liegt. Ein derartiger Bewegungsablauf ermöglicht eine bessere Positionierung des O-Rings auf der Dichtungsaufnahme, als im Stand der Technik, und kann günstig mittels der oben beschriebenen Robotermanipulatoren umgesetzt werden.

Das Bauteil kann beispielsweise ein Gehäuse einer Kraftfahrzeuglenkung sein, beispielsweise ein Getriebegehäuse oder ein Sensorgehäuse, welches als Dichtungsaufnahme bevorzugt eine außen umlaufende Radialnut aufweisen kann. Im Bereich der Dichtungsaufnahme kann ein Anschlussgehäuse, ein Gehäusedeckel oder dergleichen aufgesetzt werden, wobei der O-Ring den Ringspalt zum Gehäuse abdichtet. Der Querschnitt des Gehäuses kann rund, oder auch oval oder mehreckig sein. Das erfindungsgemäße Verfahren bildet dann ein Verfahren zur Montage einer Kraftfahrzeuglenkung.

Der Einsatz des erfindungsgemäßen Verfahrens zur Montage einer Kraftfahrzeuglenkung ist besonders vorteilhaft, da zum einen höchste Anforderungen an eine rationelle und kostengünstige Fertigung gestellt werden, und zum anderen das Zusammenwirken der Bauteile hoch sicherheitsrelevant ist, so dass der optimalen Montage des O-Rings besondere Bedeutung zukommt.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Kraftfahrzeuglenkung in einer schematischen perspektivischen Ansicht,
- Figur 2: ein Getriebe (Lenkunterstützungsgetriebe) einer Kraftfahrzeuglenkung gemäß Figur 1 in einer schematischen perspektivischen Ansicht,
- Figur 3: ein Längsschnitt durch das Getriebe gemäß Figur 2,
- Figuren 4 bis 12: aufeinanderfolgende Verfahrensschritte bei der Montage eines O-Rings an einem Getriebe gemäß Figur 2 und 3.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

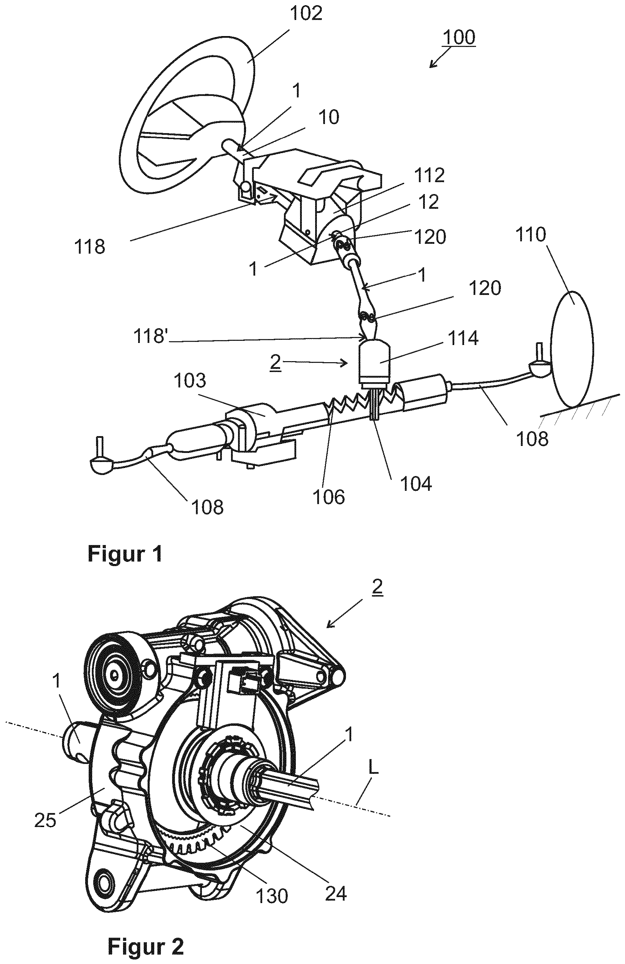

In Figur 1 ist eine Kraftfahrzeuglenkung 100 schematisch dargestellt, wobei ein Fahrer über ein Lenkrad 102 ein entsprechendes Lenk-Drehmoment (Lenkmoment) als Lenkbefehl in eine Lenkwelle 1 einbringen kann. Das Lenkmoment wird über die Lenkwelle 1 auf ein Lenkritzel 104 übertragen, welches mit einer Zahnstange 106 kämmt, die dann ihrerseits über eine Verschiebung der Spurstangen 108 den vorgegebenen Lenkwinkel auf die lenkbaren Räder 110 des Kraftfahrzeugs überträgt.

Eine elektrische Hilfskraftunterstützung kann in Form einer eingangsseitig mit der Lenkwelle 1 gekoppelten Hilfskraftunterstützung 112, einer mit dem Ritzel 104 gekoppelten Hilfskraftunterstützung 114 und/oder einer mit der Zahnstange 106 gekoppelten Hilfskraftunterstützung 116 vorgesehen sein. Die jeweilige Hilfskraftunterstützung 112, 114 oder 116 koppelt ein Hilfsdrehmoment in die Lenkwelle 1 und/oder das Lenkritzel 104 und/oder eine Hilfskraft in die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung 112, 114 oder 116 belegt. Das Hilfsdrehmoment bzw. die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten, vom Fahrer eingebrachten Lenkmoments bestimmt. Alternativ oder in Kombination mit der Einbringung des Hilfsdrehmoments kann von der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

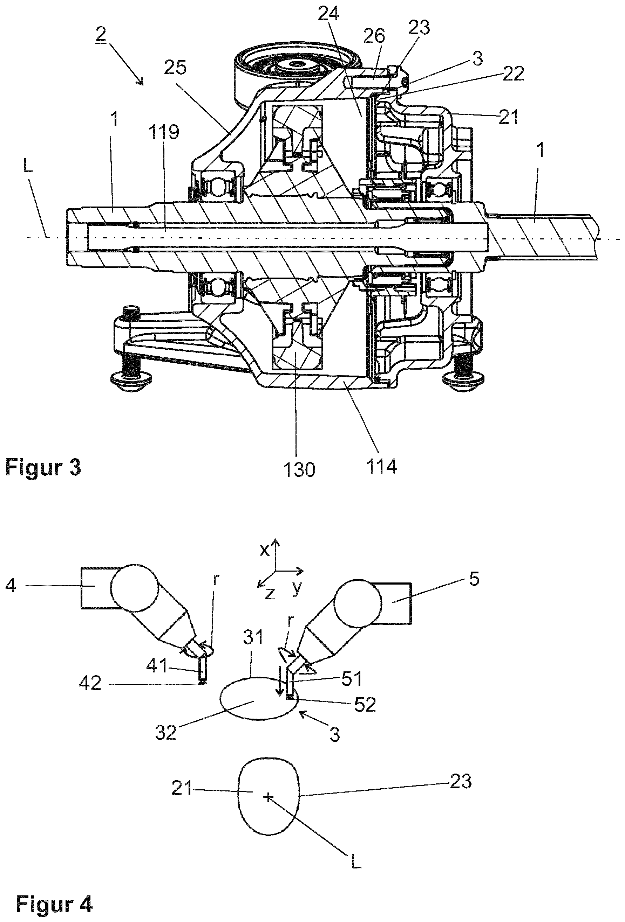

Die Lenkwelle 1 weist eingangsseitig eine mit dem Lenkrad 102 verbundene Eingangswelle 10 und ausgangsseitig eine mit der Zahnstange 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab 119 (siehe Figur 3) miteinander gekoppelt. Damit führt ein von einem Fahrer über das Lenkrad 102 in die Eingangswelle 10 eingetragenes Dreh-moment immer dann zu einer Relativdrehung der Eingangswelle 10 bezüglich der Aus-gangswelle 12, wenn die Ausgangswelle 12 sich nicht exakt synchron zu der Eingangswelle 10 dreht. Diese Relativdrehung zwischen Eingangswelle 10 und Ausgangswelle 12 kann über einen Drehwinkelsensor gemessen werden und entsprechend aufgrund der bekannten Torsionssteifigkeit des Drehstabes ein entsprechendes Eingangsdrehmoment relativ zur Ausgangswelle 12 bestimmt werden. Auf diese Weise wird durch die Bestimmung der Rela-tivdrehung zwischen Eingangswelle 10 und Ausgangswelle 12 der Drehmomentsensor 118 ausgebildet. Ein solcher Drehmomentsensor 118 ist prinzipiell bekannt und kann beispiels-weise eine elektromagnetische Sensoranordnung, wie sie weiter unten beschrieben wird, oder durch eine andere Messung der Relativverdrehung realisiert werden.

Entsprechend wird ein Lenkmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 bewirken, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder ein einzubringendes Hilfsdrehmoment bestimmen zu können.

Die Lenkwelle 1 gemäß Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann.

Im dargestellten Beispiel umfasst die Hilfskraftunterstützung 114 ein Getriebe 2, welches ein Lenkunterstützungsgetriebe bildet, und in Figur 3 im Längsschnitt entlang der Längsachse L der Lenkwelle 1 dargestellt ist, und in Figur 2 perspektivisch in teilweise montiertem Zustand.

Das Getriebe 2 weist ein Bauteil 21 auf, welches ein erstes Gehäuseteil bildet, welches einen an einem in der Darstellung von Figur 3 in Achsrichtung der Längsachse L nach links gerichteten Ansatz 22 aufweist, an dem eine als nach außen offene, also bezüglich der Längsachse L radial offene, bezüglich der Längsachse L um das Bauteil 21 umlaufende Nut 23 ausgebildet ist.

Mit dem Ansatz 22 greift das Bauteil 21 in eine korrespondierende Gehäuseöffnung 24 eines zweiten Gehäuseteils 25 ein.

In dem in Figur 3 gezeigten geschlossenen Zustand sind die Gehäuseteile 21 und 25 durch Befestigungselemente 26, beispielsweise Schrauben oder Bolzen, miteinander verbunden. Zwischen der Nut 23 und der Innenseite der Gehäuseöffnung 24 befindet sich ein radial umlaufender Spalt. Ein O-Ring 3 ist in die umlaufende Nut 23 formschlüssig eingesetzt und steht dabei radial so weit vor, dass er dichtend radial von innen an der Innenseite der Gehäuseöffnung anliegt.

In Figuren 2 und 3 ist erkennbar, wie die Lenkwelle 1 um die Längsachse L drehbar in den Gehäuseteilen 21 und 25 gelagert ist und das Gehäuse durchsetzt. Auf der Lenkwelle 1 ist drehfest ein Getrieberad 130 angebracht, beispielsweise ein Schneckenrad der Hilfskraftunterstützung 114, welches abgedichtet in dem Gehäuse untergebracht ist.

In den Figuren 4 bis 12 sind schematisch einzelne Schritte der Montage des O-Rings 3 in der Nut 23 des Bauteils 21 dargestellt. Das Bauteil 21 ist schematisch in einer axialen Ansicht in Richtung der Längsachse L gezeigt, und zwar entsprechend einer Ansicht von links gemäß Figur 3.

Der O-Ring 3 wird durch eine Dichtschnur 31 aus einem gummielastischen Material gebildet, die um eine Öffnung 32 umläuft.

Jeweils an einem Robotermanipulator 4 und 5 ist ein Montagefinger 41 und 51 befestigt, der als zylindrischer Stift ausgebildet ist und jeweils im vorderen Bereich eine umlaufende Haltenut 42, 52 als Haltevorrichtung aufweist. Die Robotermanipulatoren 4, 5 ermöglichen eine mehrachsige Bewegung der Montagefinger 41, 51 im Raum, und zwar mindestens translatorisch in x-, y- und z-Richtung sowie rotatorisch um Drehachsen r, welche im Beispiel gegenüber der Längserstreckung der Montagefinger 41, 51 abgewinkelt sind.

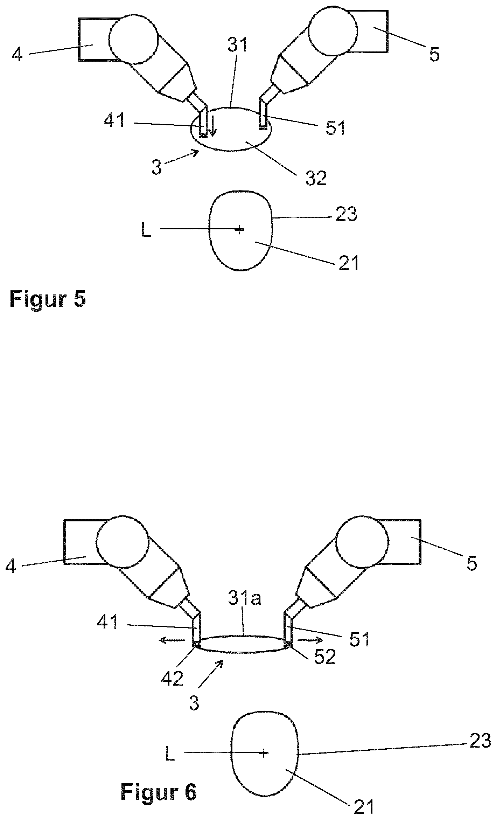

Figur 4 zeigt, wie der eine Montagefinger 51 in Einführungsrichtung in die Öffnung 32 des O-Rings 3 eingetaucht wird, und anschließend der andere Montagefinger 41, so dass sich gemäß Figur 5 beide Montagefinger 41, 51 in der Öffnung befinden, und zwar so nah benachbart, dass sie die Dichtschnur 31 zunächst nicht berühren.

Anschließend werden, wie in Figur 6 gezeigt, die Montagefinger 41, 51 in Pfeilrichtung auseinander bewegt, d.h. durch die Robotermanipulatoren 4, 5 relativ zueinander distanziert, bis die Dichtschnur 31 formschlüssig in den Haltenuten 42, 52 aufgenommen ist. Dabei wird der O-Ring 3 derart ovalförmig aufgespannt, dass zwischen den Montagefingern 41, 51 mindestens ein frei gespannter Schnurabschnitt 31a gebildet wird.

Der O-Ring 3 ist nun in einer Aufspannebene aufgespannt, welche relativ zur Aufnahmeebene, parallel zu der die Nut 23 verläuft und deren Normalenrichtung identisch mit der Längsachse L ist, geneigt ist.

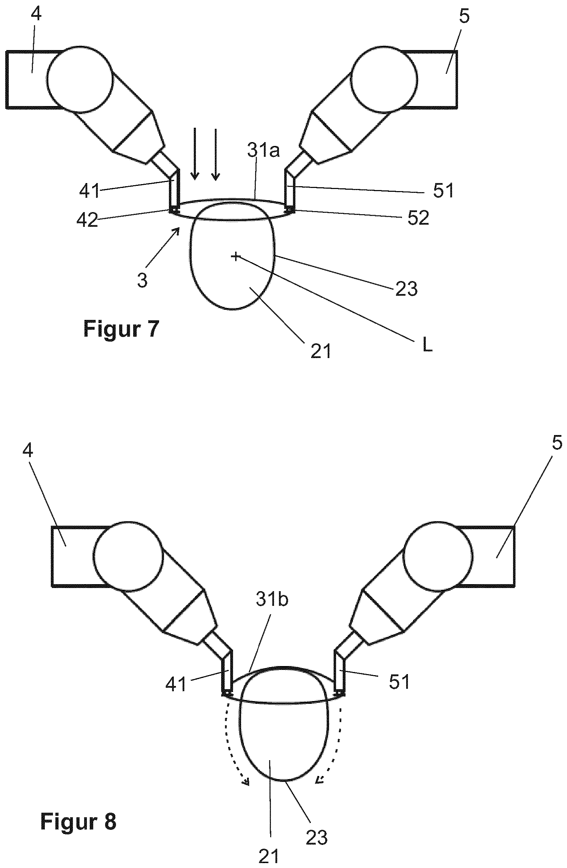

Anschließend wird der O-Ring 3 durch synchronisierte Bewegung in aufgespanntem Zustand translatorisch quer auf die Längsachse L zu bewegt, wie in Figur 7 gezeigt, bis die Dichtschnur 31 beginnend mit der Innenseite des Schnurabschnitts 31a in einem Kontaktbereich 31b die Nut 23 kontaktiert und dabei von außen in diese eingelegt wird, wie in Figur 8 dargestellt.

Figur 8 zeigt das Anlegen des O-Rings 3 an die Dichtungsaufnahme 23.

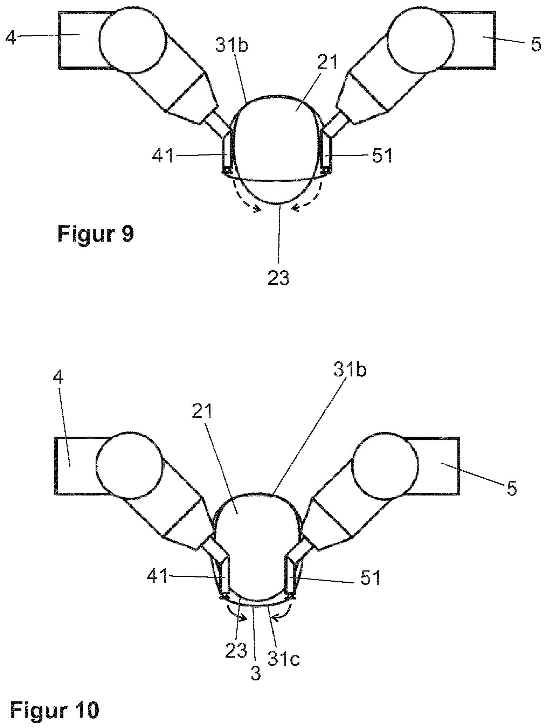

Im Folgenden werden die Montagefinger 41, 51 mit Abstand dem Verlauf der Nut 23 folgend relativ zum Bauteil 21 bewegt, wie mit den gestrichelten Pfeilen in Figur 8 und 9 angedeutet. Dadurch erfolgt das gegenläufige Umfahren der Nut 23. Dadurch wird der Kontaktbereich 31b, in dem die Dichtschnur 31 formschlüssig in der Nut 23 eingelegt ist, fortlaufend über den Umfang des Bauteils 21 vergrößert, bis die umlaufende Nut 23 sich vollständig in der Öffnung 32 des O-Rings 3 befindet, wie in Figur 10 dargestellt. Figur 10 zeigt den Endpunkt beim Umfahren, wobei der zwischen den Montagefingern 41, 51 verbleibende freie Schnurabschnitt 31c mit Abstand parallel zur Nut 23 gehalten ist.

Während der in den Figuren 8 bis 10 gezeigten Phasen kann eine gleichzeitige Kippbewegung der Robotermanipulatoren 4 und 5 ausgeführt werden, um die Aufspannebene des O-Rings 3 in Richtung der Aufnahmeebene der Nut 23 zu schwenken, bis die beiden Ebenen indem in Figur 10 gezeigten Zustand parallel zueinander liegen.

Zum Entfernen aus dem O-Ring 3 erfolgt ein gegenläufig rotierendes Verkippen der Montagefinger 41, 51 um die Drehachsen r, welche parallel zu einer Montageebene liegen, welche durch den Verlauf der Dichtschnur 31c zwischen den Montagefingern 41, 51 und dem Kontaktbereich 31b aufgespannt wird. Dadurch werden die Montagefinger 41, 51 gewissermaßen aus dem Zwischenraum zwischen der Nut 32 und dem Schnurabschnitt 31c des O-Rings 3 herausgehebelt und aus dem O-Ring 3 entfernt, wobei die Dichtschnur 31 aus den Haltenuten 42, 52 springt und nunmehr vollständig in der umlaufenden Nut 23 sitzt.

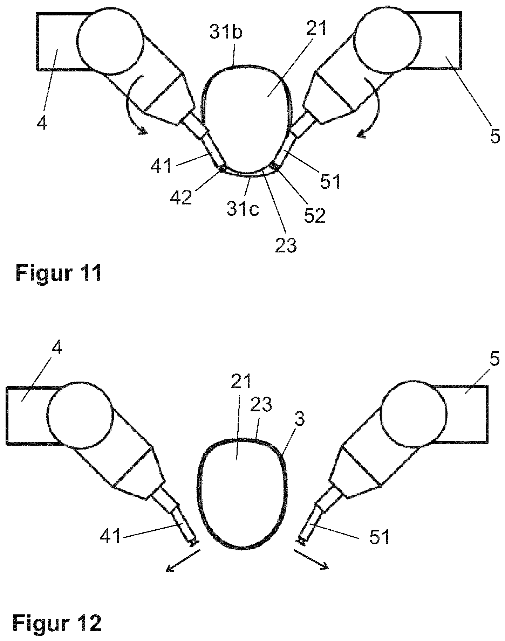

Dieser Endzustand der Montage ist in Figur 12 dargestellt. Bauteil 21 kann nun in das Gehäuseteil 25 eingesetzt werden.

### Bezugszeichenliste

- 1: Lenkwelle
- 10: Eingangswelle
- 12: Ausgangswelle
- 100: Kraftfahrzeuglenkung
- 102: Lenkrad
- 103: Lenkgetriebe
- 104: Lenkritzel
- 106: Zahnstange
- 108: Spurstange
- 110: Rad
- 112: Hilfskraftunterstützung
- 114: Hilfskraftunterstützung
- 116: Hilfskraftunterstützung
- 118: Drehmomentsensor
- 118': Drehmomentsensor
- 119: Drehstab
- 120: Gelenk
- 130: Getrieberad
- 2: Getriebe
- 21: Bauteil (Gehäuseteil)
- 22: Ansatz
- 23: Nut
- 24: Gehäuseöffnung
- 25: Gehäuseteil
- 3: ringförmiges Dichtungselement / O-Ring
- 31: Dichtschnur
- 31a: Schnurabschnitt
- 31b: Kontaktbereich
- 31c: Schnurabschnitt
- 32: Öffnung
- 4,5: Robotermanipulator
- 41, 51: Montagefinger
- 42, 52: Haltenut
- L: Längsachse

## Patentansprüche

1. Verfahren zur Montage eines ringförmigen Dichtungselements (3), der durch eine um eine Öffnung (32) umlaufende Dichtschnur (31) gebildet wird, an einer außen an einem Bauteil (21) umlaufenden Dichtungsaufnahme (23),
umfassend die Schritte:
- Einführen von zwei Montagefingern (41, 51) in die Öffnung (32) des ringförmigen Dichtungselements (3),
- Aufspannen des ringförmigen Dichtungselements (3) durch Auseinanderbewegen der Montagefinger (41, 51) unter Bildung eines zwischen den Montagefingern frei gespannten Schnurabschnitts (31a) der Dichtschnur (31),
- Anlegen des frei gespannten Schnurabschnitts (31a) in einem Kontaktbereich (31b) an die Dichtungsaufnahme (23),
- Aufbringen des ringförmigen Dichtungselements (3) mit seiner Öffnung (32) auf die Dichtungsaufnahme (23),
- Entfernen der Montagefinger (41, 51) aus dem ringförmigen Dichtungselement (3), **gekennzeichnet dadurch,**
**dass** zum Aufbringen des ringförmigen Dichtungselements (3) die Montagefinger (41, 51) dem Verlauf der Dichtungsaufnahme (23) folgend bewegt werden, zum gegenläufigen Umfahren der Dichtungsaufnahme (23).

2. Verfahren nach Anspruch 1, **dadurch gekennzeichnet, dass** die Montagefinger (41, 51) beim Umfahren mit im Wesentlichen gleichbleibendem Abstand zur Dichtungsaufnahme (23) bewegt werden.

3. Verfahren nach einem der vorangehenden Ansprüche, **dadurch gekennzeichnet, dass** die Montagefinger (41, 51) an unabhängig voneinander mehrachsig bewegbaren Robotermanipulatoren (4, 5) angebracht sind.

4. Verfahren nach einem der vorangehenden Ansprüche, **dadurch gekennzeichnet, dass** zumindest ein Montagefinger (41, 51) eine Haltevorrichtung (42, 52) aufweist, in der die Dichtschnur (31) beim Aufspannen und Umfahren positioniert ist.

5. Verfahren nach einem der vorangehenden Ansprüche, **dadurch gekennzeichnet, dass** zum Entfernen die Montagefinger (41, 51) relativ zur Dichtungsaufnahme (23) und dem ringförmigen Dichtungselement (3) verkippt werden.

6. Verfahren nach einem der vorangehenden Ansprüche, **dadurch gekennzeichnet, dass** die Dichtungsaufnahme (23) durch eine außen umlaufende Nut (23) gebildet wird.

7. Verfahren nach einem der vorangehenden Ansprüche, **dadurch gekennzeichnet, dass** der ringförmige Dichtungselement (3) sich beim Aufspannen im Wesentlichen parallel zu einer Aufspannebene erstreckt.

8. Verfahren nach einem der vorangehenden Ansprüche, **dadurch gekennzeichnet, dass** die Dichtungsaufnahme (23) sich im Wesentlichen parallel zu einer Aufnahmeebene erstreckt.

9. Verfahren nach einem der vorangehenden Ansprüche, **dadurch gekennzeichnet, dass** vor dem Anlegen des frei gespannten Schnurabschnitts (31a) die Aufspannebene relativ zur Aufnahmeebene geneigt wird.

10. Verfahren nach Ansprüchen 7 bis 9, **dadurch gekennzeichnet, dass** beim Umfahren die Aufspannebene auf die Aufnahmeebene zu verkippt wird.

## Claims

1. A method for assembling an annular seal element (3), which is formed by a sealing cord (31) which runs around an opening (32), on a seal receptacle (23) which runs around on the outside of a component (21),
comprising the steps of:
- introducing two assembly fingers (41, 51) into the opening (32) of the annular seal element (3),
- stretching the annular seal element (3) by moving the assembly fingers (41, 51) apart from one another, with the formation of a cord portion (31a) of the sealing cord (31), said cord portion being freely tensioned between the assembly fingers,
- placing the freely tensioned cord portion (31a) onto the seal receptacle (23) in a contact region (31b),
- applying the annular seal element (3), by way of its opening (32), onto the seal receptacle (23),
- removing the assembly fingers (41, 51) from the annular seal element (3), **characterized**
**in that**, for the application of the annular seal element (3), the assembly fingers (41, 51) are moved so as to follow the profile of the seal receptacle (23), in order to travel around the seal receptacle (23) in opposite directions.

2. The method as claimed in claim 1, **characterized in that**, during the traveling-around operation, the assembly fingers (41, 51) are moved at a substantially constant spacing from the seal receptacle (23).

3. The method as claimed in either of the preceding claims, **characterized in that** the assembly fingers (41, 51) are attached to robot manipulators (4, 5) which can be moved, independently of one another, along multiple axes.

4. The method as claimed in one of the preceding claims, **characterized in that** at least one assembly finger (41, 51) has a retaining device (42, 52) in which the sealing cord (31) is positioned during the stretching and traveling-around operations.

5. The method as claimed in one of the preceding claims, **characterized in that**, for removal, the assembly fingers (41, 51) are tilted relative to the seal receptacle (23) and the annular seal element (3).

6. The method as claimed in one of the preceding claims, **characterized in that** the seal receptacle (23) is formed by a groove (23) which runs around on the outside.

7. The method as claimed in one of the preceding claims, **characterized in that**, during the stretching operation, the annular seal element (3) extends substantially parallel to a stretching plane.

8. The method as claimed in one of the preceding claims, **characterized in that** the seal receptacle (23) extends substantially parallel to a receiving plane.

9. The method as claimed in one of the preceding claims, **characterized in that**, before the placing-on of the freely tensioned cord portion (31a), the stretching plane is inclined relative to the receiving plane.

10. The method as claimed in claims 7 to 9, **characterized in that**, during the traveling-around operation, the stretching plane is tilted toward the receiving plane.

## Revendications

1. Procédé de montage d'un élément d'étanchéité annulaire (3), qui est formé par un cordon d'étanchéité (31) entourant une ouverture (32), sur un logement d'étanchéité (23) entourant un composant (21) à l'extérieur,
comprenant les étapes suivantes :
- l'insertion de deux doigts de montage (41, 51) dans l'ouverture (32) de l'élément d'étanchéité annulaire (3),
- la tension de l'élément d'étanchéité annulaire (3) par un déplacement des doigts de montage (41, 51) les éloignant l'un de l'autre, en formant une section de cordon (31a) du cordon d'étanchéité (31) librement tendue entre les doigts de montage,
- la mise en place de la section de cordon librement tendue (31a) dans une zone de contact (31b) sur le logement d'étanchéité (23),
- l'application de l'élément d'étanchéité annulaire (3) avec son ouverture (32) sur le logement d'étanchéité (23),
- le retrait des doigts de montage (41, 51) hors de l'élément d'étanchéité annulaire (3),
**caractérisé en ce que**
pour l'application de l'élément d'étanchéité annulaire (3), les doigts de montage (41, 51) sont déplacés en suivant le profil du logement d'étanchéité (23), pour contourner le logement d'étanchéité (23) en sens opposé.

2. Procédé selon la revendication 1, **caractérisé en ce que** les doigts de montage (41, 51) sont déplacés avec un écart essentiellement constant par rapport au logement d'étanchéité (23) lors du contournement.

3. Procédé selon l'une quelconque des revendications précédentes, **caractérisé en ce que** les doigts de montage (41, 51) sont disposés sur des manipulateurs robotiques (4, 5) déplaçables de manière multiaxiale indépendamment les uns des autres.

4. Procédé selon l'une quelconque des revendications précédentes, **caractérisé en ce qu'**au moins un doigt de montage (41, 51) comprend un dispositif de retenue (42, 52), dans lequel le cordon d'étanchéité (31) est positionné lors de la tension et du contournement.

5. Procédé selon l'une quelconque des revendications précédentes, **caractérisé en ce que**, pour le retrait, les doigts de montage (41, 51) sont basculés par rapport au logement d'étanchéité (23) et à l'élément d'étanchéité annulaire (3).

6. Procédé selon l'une quelconque des revendications précédentes, **caractérisé en ce que** le logement d'étanchéité (23) est formé par une rainure circonférentielle extérieure (23).

7. Procédé selon l'une quelconque des revendications précédentes, **caractérisé en ce que** l'élément d'étanchéité annulaire (3) s'étend essentiellement parallèlement à un plan de tension lors de la tension.

8. Procédé selon l'une quelconque des revendications précédentes, **caractérisé en ce que** le logement d'étanchéité (23) s'étend essentiellement parallèlement à un plan de logement.

9. Procédé selon l'une quelconque des revendications précédentes, **caractérisé en ce qu'**avant la mise en place de la section de cordon librement tendue (31a), le plan de tension est incliné par rapport au plan de logement.

10. Procédé selon les revendications 7 à 9, **caractérisé en ce que** le plan de tension est basculé par rapport au plan de logement lors du contournement.
